# EUROPÄISCHE PATENTSCHRIFT

(11) **EP 0 852 692 B1**
(45) Veröffentlichungstag und Bekanntmachung des Hinweises auf die Patenterteilung: **04.10.2001**
(21) Anmeldenummer: 97930252.8
(22) Anmeldetag: 17.07.1997
(51) Int. Cl.: F27B 1/02, C21B 13/00, F27B 19/02, C22B 5/14

(54) **VERFAHREN ZUM SCHMELZEN VON OXIDISCHEN SCHLACKEN UND VERBRENNUNGSRÜCKSTÄNDEN SOWIE VORRICHTUNG ZUR DURCHFÜHRUNG DIESES VERFAHRENS**
METHOD OF MELTING OXIDIC SLAGS AND COMBUSTION RESIDUES, AND DEVICE FOR CARRYING OUT THIS METHOD
PROCEDE DE FUSION DE SCORIES ET DE RESIDUS DE COMBUSTION A OXYDES, ET DISPOSITIF PERMETTANT LA MISE EN OEUVRE DE CE PROCEDE

(30) Priorität: 24.07.1996 AT 133696
(43) Veröffentlichungstag der Anmeldung: 15.07.1998
(73) Patentinhaber: Holcim Ltd., 8645 Jona (CH)
(72) Erfinder: EDLINGER, Alfred, CH-5400 Baden (CH)
(74) Vertreter: Haffner, Thomas M., Dr.
(86) Internationale Anmeldenummer: AT9700168
(87) Internationale Veröffentlichungsnummer: WO9804878

(56) Entgegenhaltungen:
- EP-A- 0 541 269
- WO-A-90/07010
- DE-A- 4 104 252
- DE-B- 1 048 030
- FR-A- 1 483 702
- US-A- 3 702 039
- US-A- 4 027 863
- US-A- 4 798 532

## Beschreibung

Die Erfindung bezieht sich auf ein Verfahren zum Schmelzen von oxidischen Schlacken und Verbrennungsrückständen mit einem Mindestgehalt von 3 Gew.% metallisierten Anteilen, wie z.B. Fe und/oder Kohlenstoffträgern sowie eine Vorrichtung zur Durchführung dieses Verfahrens.

Schmelzaggregate, bei welchen feste Chargen unter definierten Bedingungen erschmolzen werden sollen, sind in erster Linie im Zusammenhang mit dem Schmelzen von Schrott bekannt geworden. Ziel derartiger Verfahren war das Herstellen einer flüssigen Stahlschmelze aus Schrott und/oder metallhältigen müllähnlichen Stoffen, wobei das Verfahren so geführt wurde, daß neben einer Schlackenschmelze ein Metallbad durch Reduktion der Schmelze gebildet wurde. In der Regel wurde hier eine saure Schlackenführung gewählt, und Rohstahl mit relativ geringem Kohlenstoffgehalt erschmolzen, womit allerdings eine relativ aufwendige Reinigung der entstehenden Abgase verbunden war. So ist beispielsweise aus der DE 25 04 889 A1 bereits ein Verfahren zum kontinuierlichen Einschmelzen von Schrotteisenschwämmen oder dgl. in einem Schachtofen bekannt geworden, wobei die Einsatzmaterialsäule im Gegenstrom von unten mit einer mittels Brennstoff-Sauerstoff-Verbrennung erzeugten Flamme beaufschlagt wurde. Bei diesen Verfahrensführungen wurde ein reduzierender Bereich unterhalb der oxidierenden Einschmelzzone durch Beimischen von reaktionsträgen großen Kohlenstücken zum Einsatzmaterial erzeugt. Regelmäßig war es Ziel solcher Schmelzverfahren, Stahl bzw. Roheisen zu erschmelzen, sodaß reduzierende Bedingungen erforderlich waren.

Für die nachfolgende Weiterbehandlung von Schlacken zum Zwecke der Reinigung dieser Schlacken zur Rückgewinnung wertvoller Rohstoffe und/oder von für die Zementherstellung geeigneten Additiven wurde bereits vorgeschlagen, die Schmelze unter oxidierenden Bedingungen vorzunehmen. So wurde beispielsweise in der AT-PS 401 301 bereits vorgeschlagen, zum Schmelzen von anorganischen ggf. mit Schwermetallen und/oder Schwermetallverbindungen belasteten Verbrennungsrückständen die Charge mit gasförmigem Sauerstoff oder Brennstoffen zu beaufschlagen und in einem Reaktor zu behandeln, wobei unter Ausbildung einer Schaumschlacke eine möglichst vollständige oxidative Umsetzung vorgenommen wird.

Aus der EP 541 269 ist ein Verfahren zur kontinuierlichen Herstellung von Stahl bekannt geworden. Die Vorrichtung zur Durchführung dieses Verfahrens weist einen Schachtofen auf, welcher über einen kontinuierlichen Austrag in einen direkt mit dem Schachtofen verbundenen Herdofen übergeht. Ein Abstich für eine sedimentierte Phase und ein weiterer Abstich für die Schlackenschmelze ist an den Herdofen angeschlossen.

Die vorliegende Erfindung zielt nun darauf ab, ein Verfahren der eingangs genannten Art zu schaffen, mit welchem die Ausbildung einer vollständig oxidierten Schmelze in einfacher Weise gelingt und wobei weiters eine sichere Abtrennung von Schadstoffen und insbesondere eine Abtrennung von Kupfer vor einer nachgeschalteten Schlackennachbehandlung in einfacher Weise ermöglicht wird.

Zur Lösung dieser Aufgabe besteht das erfindungsgemäße Verfahren im wesentlichen darin, daß die Schlacke in einem Schachtofen chargiert wird, daß die Charge von unten mittels fossiler Brennstoffe direkt beheizt wird, daß die Verbrennungsluft bzw. der Verbrennungssauerstoff so eingestellt wird, daß im Aufgabenbereich der Schlacken freier Sauerstoff in einer Menge von > 2 Vol% in den Verbrennungsabgasen aufrechterhalten wird, daß die Schmelze in einen mit dem Schachtofen verbundenen Herdofen übergeführt wird und unter oxidierenden Bedingungen sedimentiert wird, und daß die aus dem Schlackenbad in dem weiteren Ofen sedimentierte metallische Phase von der Schlackenphase gesondert ausgetragen wird. Dadurch, daß mit einem konventionellen Schachtofen, wie er für das Schrottschmelzen bereits vorgeschlagen wurde, gearbeitet werden kann, kann mit geringem apparativen Aufwand das erfindungsgemäße Verfahren durchgeführt werden. Dadurch, daß nun die Verbrennungsluft und der Verbrennungssauerstoff so eingestellt werden, daß im Aufgabenbereich der Schlacken freier Sauerstoff in einer Menge von > 2 Vol.%, vorzugsweise > 3 Vol.% verbleibt, wird die gewünschte vollständige Oxidation sichergesetellt, und es können Brenner mit hohen Wirkungsgraden eingesetzt werden. Dadurch, daß die Schmelze anschließend in einem mit dem Schachtofen verbundenen Herdofen übergeführt wird und unter oxidierenden Bedingungen sedimentiert, wird die Möglichkeit geschaffen, metallische Phasen von Metallen, deren Oxide unter den vorherrschenden hohen Temperaturen dissoziieren, abzuscheiden und kontinuierlich abzuziehen, wodurch es insbesondere gelingt, in diesem Herdofen beispielsweise Kupfer als metallische Phase abzutrennen. Das vollständig oxidierte Schlackenbad kann in der Folge in einfacher Weise beispielsweise einer Reduktionsbehandlung unterworfen werden, wodurch weitere Wertstoffe rückgewonnen werden können und eine von Eisen- oder Schwermetalloxiden weitestgehend freie Schlackenphase gebildet werden kann. Die erfindungsgemäße Verfahrensführung erlaubt hierbei auch eine einfache Abgasreinigung, wobei Schadstoffe aus der Abgasreinigung im Kreislauf geführt werden können und Kupfer in einfacher Weise als metallische Phase ausgetragen werden kann.

In vorteilhafter Weise wird das erfindungsgemäße Verfahren so durchgeführt, daß den fossilen Brennstoffen, wie z.B. Erdgas oder Kohlenstoff Shredderleichtfraktionen oder organische Abfallstoffe beigemengt werden. Auf diese Weise gelingt es, im Schachtofen weitere mit Schadstoffen angereicherte Fraktionen zu verarbeiten und zu entsorgen, wobei der chemisch gebundene Energieinhalt von Shredderleichtfraktionen durch vollständige Verbrennung rückgewonnen werden kann.

Um die gewünschte oxidative Behandlung des Aufgabegutes sicherzustellen, werden mit Vorteil die Abgase mit einem Gehalt von > 3 Vol% Restsauerstoff abgesaugt. Das Absaugen über ein Gebläse begünstigt hierbei die vollständige Umsetzung der Charge.

Um sicherzustellen, daß Kupferoxide vollständig thermisch dissoziieren und Kupfer metallisch ausgetragen werden kann, wird mit Vorteil die Temperatur der Schmelze im Herdofen auf > 1550° C gehalten. Um die für die vollständige Dissoziation beispielsweise von Kupferoxid erforderlichen hohen Temperaturen sicherzustellen, kann hierbei vorteilhafterweise der Herdofen über einen mit Müllverbrennungsasche, Filterstäuben, Resh und/oder Trockenklärschlamm beschickten Zyklon beheizt werden, wodurch weitere Problemstoffe unter Ausnützung ihrer chemisch gebundenen Energie sicher entsorgt werden können.

Um die für die Abtrennung der metallischen Phase im Herdofen erforderlichen Gleichgewichtsbedingungen aufrecht zu erhalten, wird mit Vorteil so vorgegangen, daß in den Herdofen Sauerstoff und Kohlenstoff zur Erzielung eines λ-Wertes größer als 0,8 bis 0,9 eingeblasen werden. Auf diese Weise lassen sich die jeweils gewünschten Bedingungen in Abhängigkeit von den für die Beheizung des Herdofens gewählten Brennstoffen an die jeweiligen Erfordernisse anpassen.

Für die Abgasreinigung kann im Rahmen des erfindungsgemäßen Verfahrens mit Vorteil so vorgegangen werden, daß die aus dem Schachtofen abgezogenen Abgase alkalisch bei einem pH-Wert > 10 gewaschen werden und daß die anfallenden Hydroxidschlämme dem Zyklon zur Beheizung des Herdofens rückgeführt werden. Die auf diese Weise gebildeten Hydroxidschlämme können durch Rückführung in den Herdofen bei den dort geforderten hohen Temperaturen quantitativ umgesetzt werden, und es können vor allen Dingen Halogenide, insbesondere Kupferchloride, zu Oxidhdyraten umgesetzt und bei ihrer Rückführung in den Herdofen thermisch dissoziiert werden, sodaß Kupfer rückgewonnen werden kann und aus dem Kreislauf ausgetragen wird. Ein Großteil der weiteren Schadstoffe kann zunächst über die Schlackenschmelze zurückgehalten werden und in einer nachgeschalteten Schlackennachbehandlung abgetrennt werden.

Zur Durchführung des erfindungsgemäßen Verfahrens ist eine Vorrichtung geeignet, welche im wesentlichen dadurch gekennzeichnet ist, daß ein Schachtofen vorgesehen ist, in welchem Brenner für fossile Brennstoffe wie Kohlenstoff oder Erdgas im unteren Bereich angeordnet sind, und daß der Schachtofen über einen kontinuierlichen Austrag in einen direkt mit dem Schachtofen verbundenen Herdofen übergeht, in welchem die flüssige Phase wenigstens teilweise sedimentiert und unter oxidierenden Bedingungen weiter beheizt ist, und daß an den Herdofen ein Abstich für eine sedimentierte Phase und ein weiterer Abstich für die Schlackenschmelze angeschlossen ist. Eine derartige apparativ einfache Vorrichtung erlaubt es, große Mengen an oxidischen Schlacken mit relativ geringem Energiebedarf quantitativ aufzuschmelzen und zu oxidieren, sodaß für nachgeschaltete Behandlungsschritte ein entsprechend vollständig oxidiertes schmelzflüssiges Produkt vorliegt.

Um sicherzustellen, daß aus der Möllersäule kontinuierlich oxidische Schlackenschmelze erschmolzen wird und um die kontinuierliche Zufuhr von aufzuschmelzenden Materialien nicht zu beeinträchtigen, ist mit Vorteil die Ausbildung so getroffen, daß in einer oberhalb der Brennkammer des Schachtofens liegenden Ebene ein Sinterbrecher angeordnet ist

Um eine möglichst rasche Abtrennung des jeweils gebildeten Sumpfes an Metallen wie beispielsweise Kupfer im Herdofen sicherzustellen und eine Rückoxidation in die Schlacke zu minimieren, ist mit Vorteil die Ausbildung so getroffen, daß der Herdofen an seinem Boden eine gegenüber dem Herdofenoberteil verjüngte Absetzkammer für die metallische Phase aufweist. Auf diese Weise wird die für eine Rückoxidation im Gleichgewicht mit der Schlacke zur Verfügung stehende Grenzfläche minimiert, und es wird gleichzeitig ein kontinuierlicher Austrag von metallischer Schmelze aus dem Herdofen ermöglicht. Um im Herdofen die jeweils geforderten oxidierenden Bedingungen aufrecht zu erhalten, ist mit Vorteil die Ausbildung so getroffen, daß der Herofen mit Baddüsen insbesondere Bodendüsen für den Eintrag von Luft oder Sauerstoff sowie Brennstoffen ausgerüstet ist. Um die Gasdurchlässigkeit der Charge sicherzustellen und Anbackungen bzw. ein Ansintern im Schacht hintanzuhalten, ist der Schachtofen mit Vorteil so ausgebildet, daß sich der lichte Querschnitt zur Aufgabe der Charge hin verjüngt.

Insgesamt gelingt es mit dieser Vorrichtung unter Verwendung konventioneller Einrichtungen, eine vollständig oxidierte Schlacke unter Abtrennung von bei der nachfolgenden Aufarbeitung der Schlacken störenden Komponenten, wie beispielsweise Kupfer, vorzunehmen, wobei Schadstoffe im Kreislauf geführt und angereichert werden können und ein hoher Anteil von mit Schadstoffen belasteten Materialien sicher entsorgt werden kann.

Die Vorrichtung zur Durchführung des erfindungsgemäßen Verfahrens wird nachfolgend näher beschrieben. Es ist ein Schachtofen vorgesehen, welchem über eine Öffnung die Charge aufgegeben wird. Die Charge wird durch Brenner direkt beheizt, wobei diesen Brennern fossile Brennstoffe sowie ggf. Shredderleichtfraktionen mit Körnungen von unter 5 mm zugeführt werden. Über Düsen kann in einer weiteren Ebene Sekundärluft zugeführt werden. Um ein Zuwachsen des Ofens durch Sinterbildung zu verhindern, kann ein Sinterbrecher vorgesehen werden, welcher durch Rotation bzw. Paddelbewegung eine Lockerung der Schüttung bewirkt. Die Verbrennungsabgase werden über eine Leitung mit einem Sauerstoffgehalt von über 3 % ausgetragen und einer Abgasreinigung zugeführt. In dieser Abgasreinigung wird unter Zufuhr von alkalischen Medien eine alkalische Fällung bei einem pH-Wert von über 10 vorgenommen, wobei die gebildeten Oxidhydrate über eine gesonderte Leitung einem Heizzyklon zugeführt werden. In den Heizzyklon wird über eine Leitung Sauerstoff eingespeist, um eine möglichst vollständige Verbrennung zu erzielen.

Das aus der Charge erschmolzene, vollständig oxidierte Schlackenbad gelangt über einen Tunnel in einen unmittelbar anschließenden Herdofen. Der Herdofen wird hierbei durch die Verbrennungsabgabe des Heizzyklons weiter erhitzt, sodaß eine Badtemperatur von über 1550° C aufrecht erhalten wird. Gegebenenfalls wird hier zur Aufrechterhaltung oxidierender Bedingungen über eine Leitung Luft oder Sauerstoff eingeblasen.

Bei Temperaturen von über 1550° C im schmelzflüssigen Schlackenbad des Herdofens erfolgt eine thermische Dissoziation von ggf. vorliegenden Kupferoxiden, und Kupfer kann kontinuierlich aus einer verjüngten Absetzkammer über einen Bodenauslaß ausgetragen werden. Die oxidierenden Bedingungen und die entsprechende Temperatur können durch Bodendüsen, über welche Kohlenstoff und Sauerstoff eingetragen werden können, aufrecht erhalten werden.

Das schmelzflüssige Schlackenbad gelangt über einen Austrag in eine nachfolgende Schlackenbehandlung, in welche weitere Wertstoffe, wie beispielsweise Eisenoxid oder Schwermetalloxide durch reduktive Verfahren abgetrennt werden können.

## Patentansprüche

1. Verfahren zum Schmelzen von oxidischen Schlacken und Verbrennungsrückständen mit einem Mindestgehalt von 3 Gew.% metallisierten Anteilen, wie z.B. Fe und/oder Kohlenstoffträgern, wobei die Schlacke in einem Schachtofen chargiert wird, die Beschickungssäule von unten mittels fossiler Brennstoffe direkt beheizt wird, die Verbrennungsluft bzw. der Verbrennungssauerstoff so eingestellt wird, daß im Aufgabebereich der Schlacken freier Sauerstoff in einer Menge von > 2 Vol% in den Verbrennungsabgasen aufrechterhalten wird, die Schmelze in einen mit dem Schachtofen verbundenen Herdofen übergeführt wird und unter oxidierenden Bedingungen sedimentiert wird, und wobei die aus dem Schlackenbad in dem weiteren Ofen sedimentierte metallische Phase von der Schlackenphase gesondert ausgetragen wird.

2. Verfahren nach Anspruch 1, **dadurch gekennzeichnet, daß** den fossilen Brennstoffen, wie z.B. Erdgas oder Kohlenstoff Shredderleichtfraktionen oder organische Abfallstoffe beigemengt werden.

3. Verfahren nach Anspruch 1 oder 2, **dadurch gekennzeichnet, daß** die Abgase mit einem Gehalt von > 3 Vol% Restsauerstoff abgesaugt werden.

4. Verfahren nach einem der Ansprüche 1, 2 oder 3, **dadurch gekennzeichnet, daß** die Temperatur der Schmelze im Herdofen auf > 1550° C gehalten wird.

5. Verfahren nach einem der Ansprüche 1 bis 4, **dadurch gekennzeichnet, daß** der Herdofen über einen mit Müllverbrennungsasche, Filterstäuben, Resh und/oder Trockenklärschlamm beschickten Zyklon (12) beheizt wird.

6. Verfahren nach einem der Ansprüche 1 bis 6, **dadurch gekennzeichnet, daß** die aus dem Schachtofen abgezogenen Abgase alkalisch bei einem pH-Wert > 10 gewaschen werden und **daß** die anfallenden Hydroxidschlämme dem Zyklon zur Beheizung des Herdofens rückgeführt werden.

## Claims

1. A method for melting oxidic slags and combustion residues having a minimum content of 3 wt.-% of metallized portions such as, e.g., Fe and/or carbon carriers, wherein the slag is charged into a shaft furnace, the charging column is directly heated from below by the aid of fossil fuels, the combustion air or combustion oxygen is adjusted such that in the slag charging region free oxygen is maintained in an amount of >2 vol.-% within the combustion offgases, the melt is transferred into a hearth-type furnace connected with the shaft furnace and sedimented under oxidizing conditions, and wherein the metallic phase sedimented from the slag bath in the additional furnace is discharged upon separation from the slag phase.

2. A method according to claim 1, **characterized in that** the fossil fuels such as, e.g., natural gas or carbon, are supplemented with shredder light fraction or organic waste substances.

3. A method according to claim 1 or 2, **characterized in that** the exhaust gases are sucked off having a content of >3 vol.-% residual oxygen.

4. A method according to any one of claims 1, 2 or 3, **characterized in that** the temperature of the melt within the hearth-type furnace is kept at >1550°C.

5. A method according to any one of claims 1 to 4, **characterized in that** the hearth-type furnace is heated via a cyclone (12) charged with waste incineration ashes, filter dusts, Resh and/or dry sewage sludge.

6. A method according to any one of claims 1 to 5, **characterized in that** the offgases drawn off the shaft furnace are subjected to alkaline scrubbing at a pH of >10 and the hydroxide sludges occurring are recycled to the cyclone to heat the hearth-type furnace.

## Revendications

1. Procédé pour faire fondre des scories oxidiques et des résidus de combustion avec un contenu minimum en portions metallisées, comme par exemple Fe et/ou porteurs de carbone, de 3 % en poids, la scorie étant chargée dans un four vertical, la colonne des charges étant chauffé en direct par dessous à l'aide de combustibles fossiles, l'air de combustion ou l'oxygène de combustion étant ajusté de manière que la quantité d'oxygène libre présent dans les gaz de combustion dans la région de chargement est maintenue à > 2 % vol., la scorie étant convoyée à un four à sole connecté avec le four vertical et déposée par sédimentation dans des conditions oxydantes, la phase métallique de la scorie déposée par sédimentation dans le four additionnel étant déchargée séparément de la phase de scorie.

2. Procédé selon la revendication 1, **caractérisé en ce qu'**une fraction légère de shredder ou des déchets organiques sont ajoutés au combustibles fossiles, comme par exemple le gas naturel ou le carbone.

3. Procédé selon la revendication 1 ou 2, **caractérisé en ce que** les gaz de combustion son aspirés avec un contenu d'oxygène résiduel de > 3% vol.

4. Procédé selon la revendication 1, 2 ou 3, **caractérisé en ce que** la température de la fonte dans le four à sole est maintenue à > 1550° C.

5. Procédé selon l'une des revendications 1 à 4, **caractérisé en ce que** le four à sole est chauffé par un cyclone (12) étant chargé avec des cendres d'incinération d'ordures ménagères, des poussières de filtre, du Resh et/ou des boues de curage secs.

6. Procédé selon l'une des revendications 1 à 5, **caractérisé en ce que** les gaz de combustion sortants du four vertical sont lavés alcalinement avec un pH > 10 et que les boues hydroxydes en résultant sont recyclées dans le cyclone pour chauffer le four à sole.
